**Europäisches Patentamt**

**European Patent Office**

**Office européen des brevets**

(11) Veröffentlichungsnummer: **0 486 800 A1**

# EUROPÄISCHE PATENTANMELDUNG

(21) Anmeldenummer: **91117099.1**

(22) Anmeldetag: **08.10.91**

(51) Int. Cl.⁵: **C04B 40/02**

(30) Priorität: **05.11.90 DE 4035061**

(43) Veröffentlichungstag der Anmeldung:
**27.05.92 Patentblatt 92/22**

(84) Benannte Vertragsstaaten:
**AT BE CH DE DK ES FR GB GR IT LI LU NL SE**

(71) Anmelder: **VAW FLUSSSPAT-CHEMIE GMBH**
**Werkstrasse 2**
**W-8470 Stulln/Nabburg(DE)**

(72) Erfinder: **Schultz, Gerhard**
**Eschenweg 1**
**W-8472 Schwarzenfeld(DE)**
Erfinder: **Born, Helmut**
**Erlenstrasse 5**
**W-8470 Stulln/Nabburg(DE)**

(74) Vertreter: **Müller-Wolff, Thomas, Dipl.-Ing.**
**Vereinigte Aluminium-Werke AG**
**Georg-von-Boeselager-Strasse 25 Postfach 2468**
**W-5300 Bonn 1(DE)**

(54) **Verfahren und Vorrichtung zur Herstellung von dampfgehärteten Bauteilen.**

(57) Bei den bekannten Verfahren wird die zum Härten benötigte Wärme den zu härtenden Formkörpern durch gesättigten Dampf zugeführt, der in den Druckbehälter des Autoklaven eingeleitet wird.

Es soll bei einem Verfahren zur Herstellung von dampfgehärteten Bauteilen der Vorgang des Härtens von Formkörpern und insbesondere von Bauteilen aus Kalk-Sand-Stein, Schaumbeton und Porenbeton (Gasbeton) beschleunigt werden und die zur Durchführung des Verfahrens geeignete Vorrichtung vereinfacht werden. Das Verfahren ist dadurch gekennzeichnet, daß die Erhitzung bei Normaldruck in Umgebungsluft beginnt und solange fortgesetzt wird, bis ein Enddruck zwischen 12 - 15 bar erreicht ist, dann die Bauteile bei diesem Druck für 4 - 6 Stunden gehalten werden und anschließend eine Abkühlung auf Raumtemperatur in Abhängigkeit von der Rohdichte des herzustellenden Bauteils erfolgt.

EP 0 486 800 A1

Die Erfindung betrifft ein Verfahren und eine Vorrichtung zur Herstellung von dampfgehärteten Bauteilen, insbesondere porosierten Leichtbaustoffen, in Wasserdampf im Innern des Druckbehälters eines Autoklaven mittels einer Aufheizphase, einer Haltephase und einer anschließenden Abkühlungsphase gemäß dem Oberbegriff des Anspruchs 1.

Bei bekannten Verfahren dieser Art wird die zum Härten benötigte Wärme den zu härtenden Formkörpern durch gesättigten Dampf zugeführt, der in den Druckbehälter des Autoklaven eingeleitet wird. Nach DE-OS 33 26 492 wird zusätzlich nach Erreichen einer vorgegebenen oberen Endtemperatur des Dampfes und vor der Abkühlungsphase dem Innern des Druckbehälters durch Beheizung eine die zum Ausgleich von Wärmeverlusten des Behälters benötigte Wärmemenge übersteigende Wärmemenge zugeführt. Die dabei angesichts des Sättigungszustandes des Dampfes im Druckbehälter des Autoklaven an sich zu erwartende Temperatursteigerung wird durch Abblasen von Dampf unterbunden.

Das bekannte Verfahren nach DE-OS 33 26 492 erweist sich somit als ein temperaturgeregeltes Autoklaven-Verfahren, bei dem der Sättigungsdruck zum vorgegebenen oberen Endwert der Temperatur des Dampfes eingehalten wird.

Aufgabe der vorliegenden Erfindung ist es, bei einem Verfahren der eingangs genannten Art den Vorgang des Härtens von Formkörpern und insbesondere von Bauteilen aus Kalk-Sand-Stein, Schaumbeton und Porenbeton (Gasbeton) zu beschleunigen und die zur Durchführung des Verfahrens geeignete Vorrichtung zu vereinfachen.

Die Aufgabe wird durch die in den Patentansprüchen angegebenen Merkmale gelöst.
Es hat sich gezeigt, daß durch den Verzicht auf die Verwendung von separat erzeugtem Wasserdampf und durch Ausbildung einer aus überhitztem Dampf bestehenden Atmosphäre im Autoklaven die Aufheizphase wesentlich verkürzt werden kann. Bei der erfindungsgemäßen Vorrichtung zur Durchführung des Verfahrens kann auf das übliche Kondensat-Abführungssystem mit Rückführung oder Neutralisation des Kondensates verzichtet werden, da beim erfindungsgemäßen Verfahren kein Kondensat anfällt.

Im folgenden wird die Erfindung anhand von 3 Ausführungsbeispielen näher erläutert. Es zeigen:

Figur 1: Darstellung des erfindungsgemäßen Verlaufes einer Dampfdruckkurve;

Figur 2: schematischer Aufbau einer erfindungsgemäßen Vorrichtung mit Heizspiralen im Querschnitt

Figur 3: schematischer Aufbau einer erfindungsgemäßen Vorrichtung mit ölgefüllten Heizschlangen im Querschnitt

Der erfindungsgemäße Druckverlauf der Dampfdruckkurve nach Figur 1 besteht aus einer Aufheizphase (1a), einer Haltephase (1b) und einer Abkühlungsphase, die je nach der zu erzielenden Rohdichte des Bauteils zwischen 1,5 Stunden (Verlauf 1c) und 3,5 Stunden (Verlauf 1d) betragen kann. Dieser Kurvenverlauf läßt erkennen, daß es bei dem erfindungsgemäßen Verfahren darauf ankommt, innerhalb kurzer Zeit, auf jeden Fall wesentlich unterhalb von 5 Stunden den Probekörper aufzuheizen (Aufheizphase 1a) und dann für eine gewisse Härtezeit (Haltephase 1b) den Druck von 12 - 15 bar aufrecht zu erhalten.

Ferner ist es entscheidend, daß bei dem erfindungsgemäßen Verfahren die Abkühlungsphase unbedingt auf die jeweilige Rohdichte des Probekörpers abgestimmt wird. Dies vermeidet eine erhöhte Rißausbildung und sorgt für eine verbesserte Homogenität in den Probekörpern.

Es wurden nun 5 Porenbeton-Probekörper (1) mit den Abmessungen 42 x 35 x 25 cm hergestellt, gewogen und auf ein Gestell (5) in einen Technikums-Autoklaven (2) mit einem regelbaren Überdruckventil (3) aufgesetzt. Die Abmessungen des Autoklaven (2) und der Probekörper (1) wurden so gewählt, um einen Füllungsgrad zu erreichen, der einem herkömmlichen mit Wasser-Sattdampf betriebenen Produktions-Autoklaven entspricht.

Der Autoklav (2) wurde mit einem Deckel (4) dicht verschlossen und auf eine Temperatur von 225 °C innerhalb von 1,5 Stunden aufgeheizt. Dabei verdampfte das Anmachwasser aus den Probekörpern und bildete eine Luft-Wasserdampf-Atmosphäre, die über das regelbare Überdruckventil (3) so gesteuert wurde, daß ein Druckverlauf entsprechend der in Figur 1 dargestellten Dampfdruckkurve eingehalten werden konnte.

Das Aufheizen wurde mittels elektrisch betriebener Heizstäbe (6) im Autoklaven (2) durchgeführt. Es lassen sich aber auch an Stelle der Heizstäbe (6) mehrere Heizschlangen (7) verwenden, die mit einem Wärmeträgeröl gefüllt sind. Eine entsprechende Vorrichtung ist in Figur 3 dargestellt. Sie besteht aus einem Autoklaven (10), einem Deckel (11) und einem regelbaren Überdruckventil (12). Der Probekörper (8) befindet sich auf einem Rost (9).

Während der Haltephase (1b) wurde der Druck auf 13 bar für 5 Stunden konstant gehalten. In dieser Zeit erfolgte die Härtung der Probekörper mit einem überhitzten Wasserdampf-Luftgemisch. Danach wurde der Druck entsprechend der in Figur 1 dargestellten Variante (1c) innerhalb von 1,5 Stunden abgelassen. Der Autoklav wurde geöffnet und die Probekörper entnommen.

Nach dem Wiegen stellte sich überraschenderweise heraus, daß die Probekörper einen Feuchtigkeitsverlust von 25 Gewichtsprozent aufwiesen, d.

h. einen Restfeuchtegehalt von nur 5 Gewichtsprozent aufwiesen. Der niedrige Restfeuchtegehalt konnte trotz des sehr schnellen Härteverfahrens ohne Rißbildung in den Probekörpern erzielt werden.

Weitere Versuche haben ergeben, daß die Abkühlungsphase bei einer Rohdichte von 0,4 kg/dm$^3$ etwa eine Stunde betragen kann und bei einer Rohdichte von 0,8 kg/dm$^3$ etwa 3,5 Stunden dauern muß, um einen homogenen Aufbau der Probekörper zu garantieren.

In einem weiteren Vergleichsversuch wurde im Technikums-Autoklaven mit Wasser-Sattdampf-Härtung gearbeitet. Bei gleicher Verfahrensweise ergab dies einen Feuchtigkeitsverlust von nur 6 Gewichtsprozent, was einer Restfeuchte von ca. 24 Gewichtsprozent entspricht. Das dadurch bedingte höhere Gewicht der Probekörper verursacht Nachteile beim Transport und bei der Handhabung. Hinzu kommt, daß Bauteile mit einer so hohen Restfeuchte eine sehr lange Trocknungsdauer von 2 - 3 Jahren benötigen, bis sie sich an die Ausgleichsfeuchte der Umgebung angepaßt haben. In dieser Zeit ist die Wärmedämmung der unter Verwendung von Bauteilen mit hoher Restfeuchte hergestellten Gebäude sehr ungünstig.

## Patentansprüche

1. Verfahren zur Herstellung von dampfgehärteten Bauteilen aus Kalk-Sand-Stein, Schaumbeton und/oder Porenbeton (Gasbeton), insbesondere aus porosierten Leichtbaustoffen, wobei die Bauteile in Wasserdampf im Innern des Druckbehälters eines Autoklaven innerhalb einer Aufheizphase erhitzt und zumindest bis zum Erreichen einer Ausgleichstemperatur (Haltephase) gehärtet werden, dadurch gekennzeichnet, daß die Erhitzung bei Normaldruck in Umgebungsluft beginnt und solange fortgesetzt wird, bis ein Enddruck zwischen 12 - 15 bar erreicht ist,
dann die Bauteile bei diesem Druck für 4 - 6 Stunden gehalten werden und anschließend eine Abkühlung auf Raumtemperatur in Abhängigkeit von der Rohdichte des herzustellenden Bauteils erfolgt.

2. Verfahren nach Anspruch 1, dadurch gekennzeichnet, daß die zur Härtung erforderliche Energie ausschließlich in Form von Wärmestrahlung dem Bauteil im Autoklaven zugeführt wird.

3. Verfahren nach einem der vorhergehenden Ansprüche, dadurch gekennzeichnet, daß die Bauteile bei einer Temperatur zwischen 200 - 250 °C gehalten werden.

4. Verfahren nach einem der vorhergehenden Ansprüche, dadurch gekennzeichnet, daß sich im Innern des Autoklaven während einer Aufheizphase von 1 - 2 Stunden (1a) durch Zuführung von Wärmestrahlung ein Wasserdampf/Luftgemisch bildet, daß in der Haltephase (1b) als überhitzter Dampf auf die Bauteile einwirkt und diese härtet.

5. Verfahren nach einem der vorhergehenden Ansprüche, dadurch gekennzeichnet, daß das Bauteil in der Abkühlungsphase (1c, 1d) von 200 - 250 °C auf Raumtemperatur während der Zeit von 1 - 4 Stunden unter Ausbildung eines Restfeuchtegehalts von 3 - 20 Massen-% bezogen auf absolut trocken abgekühlt wird.

6. Verfahren nach einem der vorhergehenden Ansprüche, dadurch gekennzeichnet, daß der Druck im Autoklaven während der Aufheiz- und Haltephase (1a, 1b) unterhalb eines Maximalwertes gehalten wird.

7. Verfahren nach einem der vorhergehenden Ansprüche, dadurch gekennzeichnet, daß der Maximalwert des Druckes 18 bar beträgt.

8. Verfahren nach einem der vorhergehenden Ansprüche, dadurch gekennzeichnet, daß die Temperatur während der Haltephase 190 - 250 °C beträgt.

9. Verfahren nach einem der vorhergehenden Ansprüche, dadurch gekennzeichnet, daß der Restfeuchtegehalt der herzustellenden Bauteile durch ein Dampfdruck-Regelventil mit vorgebbarer Regelcharakteristik entsprechend dem in Figur 1 dargestellten Verlauf der Dampfdruckkurve gesteuert wird.

10. Vorrichtung zur Durchführung des Verfahrens nach einem der vorhergehenden Ansprüche, bestehend aus einem Autoklaven mit einer Heizeinrichtung, dadurch gekennzeichnet, daß die Heizeinrichtung aus einer als Wärmestrahler ausgebildeten elektrischen Heizvorrichtung (6) besteht.

11. Vorrichtung nach einem der vorhergehenden Ansprüche, dadurch gekennzeichnet, daß die Wärmestrahlung mittels eines in einer Rohrschlange (7) enthaltenen Wärmeträgeröls erzeugt wird.

12. Vorrichtung nach einem der vorhergehenden Ansprüche, dadurch gekennzeichnet, daß die Wärmestrahlung mittels eines in einer Rohrschlange enthaltenen Heißgases erzeugt wird.

13. Vorrichtung nach einem der vorhergehenden Ansprüche, dadurch gekennzeichnet, daß die Wärmestrahlung mittels einer Induktionsvorrichtung erzeugt wird.

14. Vorrichtung nach einem der vorhergehenden Ansprüche, dadurch gekennzeichnet, daß die für die Härtung erforderliche Wärmeenergie durch Mikrowellen erzeugt wird.

15. Vorrichtung nach einem der vorhergehenden Ansprüche, dadurch gekennzeichnet, daß im Autoklaven (2, 10) Überdruckventile (3, 12) und Heizelemente (6, 7) vorhanden sind.

16. Vorrichtung nach einem der vorhergehenden Ansprüche, dadurch gekennzeichnet, daß der durch die zugeführte Wärmestrahlung resultierende Druck im Fühler (13) meßbar ist und das während der Aufheiz- und Haltephase anstehende Dampf-Luftgemisch und damit die Feuchtigkeit aus den Bauteilen über Ventile (3, 12) steuerbar ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-2 215 126 (DAHMIT BRENN- UND BAUSTOFFGESELLSCHAFT PAUL DAHM) * Seite 4, Zeile 13 - Zeile 16; Ansprüche 1,2 * --- | 1,2 | C04B40/02 |
| A | US-A-2 044 204 (B. F. PRICE) * Anspruch 1 * --- | 1 | |
| A | US-A-4 338 135 (H.F. COOK) * Zusammenfassung * --- | 1,10,14 | |
| A | FR-A-2 050 870 (HOUILLERES DU BASSIN DU NORD ET DU PAS-DE CALAIS) * Seite 3, Zeile 29 - Zeile 32; Anspruch 1 * --- | 1,10,11 | |
| A | FR-A-2 179 314 (CENTRE D'ETUDES & DE RECHERCHES DE L' IND. DU BETON MANUFACTURE) * Anspruch 1 * --- | 1,10,13 | |
| A | DE-A-2 411 593 (MASCHINEBAU SCHOLZ & CO.) * Seite 9, Zeile 19 - Seite 10, Zeile 8; Anspruch 1 * --- | 1,10,15, 16 | |
| A | FR-A-691 850 (A. TAUSCHENSKY) --- | | RECHERCHIERTE SACHGEBIETE (Int. Cl.5) |
| A | US-A-3 505 439 (D.R. MOOREHEAD ET AL.) --- | | C04B B28B |
| A | US-A-3 427 374 (J. C. JACKSON ET AL.) ----- | | |

Der vorliegende Recherchenbericht wurde für alle Patentansprüche erstellt

| Recherchenort | Abschlußdatum der Recherche | Prüfer |
|---|---|---|
| DEN HAAG | 03 FEBRUAR 1992 | DAELEMAN P.C.A. |